# EUROPÄISCHE PATENTANMELDUNG

(11) **EP 4 379 250 A1**
(43) Veröffentlichungstag der Anmeldung: **05.06.2024**
(21) Anmeldenummer: 23210791.2
(22) Anmeldetag: 20.11.2023
(51) Int. Cl.: F16L 55/1645

(54) **KOMPAKTES MEHRKAMMERMAGAZIN MIT INTEGRIERTER AUSPRESS- UND MISCHVORRICHTUNG**

(30) Priorität: 01.12.2022 DE 102022131864
(71) Anmelder: Strebel, Martin, 8852 Altendorf (CH)
(72) Erfinder: Strebel, Martin, 8852 Altendorf (CH)
(74) Vertreter: Laufhütte, Dieter

(57) **Zusammenfassung**

Die Erfindung betrifft ein kompaktes Mehrkammermagazin mit integrierter Auspressvorrichtung und integrierter Mischvorrichtung, insbesondere zum Mischen von Epoxidharz in der Kanalisationssanierung, umfassend mindestens zwei voneinander getrennte Kammern zur Aufnahme von Komponenten eines Abdichtmittels enthaltenden Behältern, mindestens zwei innerhalb der Kammern mittels einer Auspressvorrichtung des Mehrkammermagazins entlang einer Längsachse des Mehrkammermagazins bewegbare Kolben zum Auspressen von Abdichtmittelkomponentenmasse aus den Behältern sowie eine Mischvorrichtung, durch welche die aus den Behältern ausgepressten Massen zum Mischen der Abdichtmittelkomponenten gepresst werden. Erfindungsgemäß umfasst die Mischvorrichtung einen flexiblen Schlauch mit innenliegenden Statikmischerelementen, wobei die Kolben über einen mittels der Auspressvorrichtung bewegbaren Kolbenträger miteinander verbunden sind und die Kammern jeweils seitlich eine Ausnehmung aufweisen, durch die ein Abschnitt des Kolbenträgers radial zur Längsrichtung des Mehrkammermagazins in das Innenvolumen der Kammer ragt. Die Erfindung betrifft weiterhin ein Verfahren zum Reparieren von Rohrleitungsmuffen oder Rohrrissen unter Verwendung eines Abdichtmittels, insbesondere eines Epoxidharzes, welches mittels des erfindungsgemäßen Mehrkammermagazins gemischt wird.

## Beschreibung

Die vorliegende Erfindung betrifft ein Mehrkammermagazin mit integrierter Auspressvorrichtung und integrierter Mischvorrichtung nach dem Oberbegriff des Anspruchs 1, sowie ein Verfahren zum Reparieren von Rohrleitungen nach Anspruch 14.

Das Haupteinsatzgebiet der vorliegenden Erfindung ist die Kanalisationssanierung, in der Schadstellen mit einem Abdichtmittel, vorwiegend mit einem Zweikomponenten-Epoxidharz, repariert und abgedichtet werden. Schadstellen können dabei insbesondere Rohrrisse, Rohrbrüche, geöffnete Rohrverbindungen wie Muffen oder seitlich eintreffende Rohranschlüsse sein.

Bei der Sanierung von engen Rohrleitungen, die für menschliches Personal nicht oder nur schwer zugänglich sind, kommen häufig spezielle Kanalroboter zum Einsatz, die die entsprechenden Reparaturen bzw. Erneuerungsarbeiten durchführen. Dabei werden zum Beispiel für Rohranschlüsse und Abzweigungen spezielle und an die jeweilige Rohrleitungsgeometrie anpassbare Schalungen und Blasen verwendet, um die zu bearbeitenden Rohrmündungsstelle so zu verschalen, sodass im nächsten Schritt ein Epoxidharz hinter die gebaute Schalung gefüllt werden kann und beide Rohre fest und dicht miteinander verbunden werden. Eine derartige Schalung sowie ein entsprechendes Verfahren zum vorrübergehenden oder endgültigen Verschließen bzw. Abdichten einer Mündungsstelle einer Anschlussleitung in eine Hauptleitung sind beispielsweise aus der WO 95/27167 A1 bekannt. Bei den genannten Leitungen kann es sich um Abwasserkanäle und darin mündende Hausabwasserleitungen handeln. Weitere zu reparierende Schadensarten in einer Rohrleitung können Risse und oder durch einen Knick geöffnete Muffen sein. Solche Schadensfälle werden ebenfalls mit einem Epoxidharz, hierbei allerdings durch Verspachteln verschlossen. Vor allen bei Reparaturarbeiten, bei denen Epoxidharz verwendet wird, wird die Schadstelle vorher mit einem Fräsroboter ausgefräst und Ablagerungen entfernt, um eine ausreichende Haftung des Epoxidharzes am Betonrohr zu ermöglichen.

Das verwendete Epoxidharz, bestehend typischerweise aus zwei Komponenten, wird üblicherweise oberirdisch in einem Sanierungsfahrzeug gemischt und dann in ein Magazin gefüllt, welches anschließend an den Kanalroboter angeschlossen wird. Die hierbei verwendeten Mischgeräte sind in der Regel einerseits wie eine Ständerbohrmaschine mit Rührwendel aufgebaut oder als zweite Bauvariante mit einem Statikmischer ausgestattet, der mehrere (z.B. vier) Schlauchbeutel aufnehmen kann und mit Druckluft oder einem Elektromotor das Harz durch den Statikmischer presst.

Um die Sanierungsaufträge wirtschaftlich schnell erledigen zu können, werden häufig schnellaushärtende Harze verwendet, welche ebenfalls schnell an die Reparaturstelle in der Kanalisation gebracht werden müssen, was mit den aktuellen Magazinlösungen nicht immer möglich ist. Des Weiteren ergibt sich aus dem bereits reagierenden Harz im Magazin das Problem, dass je nach Reaktionsverhalten des Harzes oftmals nicht die gesamte Masse des Harzes verwendet werden kann, selbst wenn in einem Kanal mehrere Schadstellen zu reparieren sind, da Harz im Magazin aushärtet und nicht ausgepresst werden kann.

Der vorliegenden Erfindung liegt daher die Aufgabe zugrunde, die Verwendung von Abdichtmitteln, insbesondere von schnelltrocknenden Harzen, bei der Reparatur von Schadstellen in Rohrleitungen zu vereinfachen.

Diese Aufgabe wird durch eine Vorrichtung mit den Merkmalen des Anspruchs 1 gelöst. Vorteilhafte Ausführungsformen der Erfindung ergeben sich aus den Unteransprüchen und der nachfolgenden Beschreibung.

Demnach wird ein kompaktes Mehrkammermagazin mit integrierter Auspressvorrichtung und integrierter Mischvorrichtung vorgeschlagen, welches insbesondere zum Mischen von Mehrkomponenten-Epoxidharz in der Kanalisationssanierung eingesetzt werden kann. Das erfindungsgemäße Mehrkammermagazin (nachfolgend auch kurz "Magazin" genannt) umfasst mindestens zwei voneinander getrennte Kammern zur Aufnahme von Behältern, die Komponenten eines Abdichtmittels wie beispielsweise eines Mehrkomponenten-Epoxidharzes enthalten, mindestens zwei innerhalb der Kammern mittels einer Auspressvorrichtung des Mehrkammermagazins entlang einer Längsachse des Mehrkammermagazins bewegbare Kolben zum Auspressen von Abdichtmittelkomponentenmasse aus den Behältern sowie eine Mischvorrichtung, durch welche die aus den Behältern ausgepressten Massen zum Mischen der Abdichtmittelkomponenten gepresst werden.

Die Kammern können im Wesentlichen zylinderförmig ausgestaltet sein, sodass beispielsweise zylinderförmige Kartuschen oder Schlauchbeutel in die Kammern passen. Die Ausnehmungen können klein und beispielsweise schlitzförmig ausgestaltet sein. Allerdings sind auch Ausführungsformen denkbar, bei denen die Ausnehmung im Wesentlich die gesamte "Außenseite" der Kammer bildet. In letzterem Fall können die Behälter in Halterungen befestigbar sein, welche sich innerhalb der Kammern befinden, damit diese nicht durch die Ausnehmungen herausfallen.

Erfindungsgemäß umfasst die Mischvorrichtung einen flexiblen Schlauch mit innenliegenden Statikmischerelementen. Die ausgepressten Komponentenmassen aus den Behältern werden also beim Durchgang durch den flexiblen Schlauch gemischt, sodass das fertige, einsatzbereite Abdichtmittel aus einem Ende des Schlauchs tritt und zur Reparatur einer Schadstelle eingesetzt werden kann. Ferner sind erfindungsgemäß die Kolben über einen Kolbenträger miteinander verbunden, wobei der Kolbenträger wiederum mittels der Auspressvorrichtung verschiebbar bzw. bewegbar ist. Die Kolben werden also nicht individuell, sondern gemeinsam über den Kolbenträger bewegt.

Weiterhin weisen die Kammern erfindungsgemäß jeweils seitlich eine Ausnehmung auf, durch die ein Abschnitt des Kolbenträgers radial zur Längsrichtung des Mehrkammermagazins (d.h. quer zur Auspressbewegungsrichtung bzw. zur Bewegungsrichtung der Kolben) von außen in das Innenvolumen der jeweiligen Kammer ragt. Mit anderen Worten "schneidet" ein Abschnitt des Kolbenträgers die durch die Ausnehmung verlängerte Mantelfläche der jeweiligen Kammer.

Durch diese Lösung, dass die Kammern des Magazins beim Auspressen durch den Kolbenträger "geschnitten werden", ist eine kompakte Bauweise des Magazins möglich, da die Halterungen für die den Auspressvorgang betätigenden Kolben nicht wie üblich von hinten, sondern von der Seite her in die Kammern geführt werden und daher im gefüllten Zustand der Behälter nicht in Längsrichtung nach hinten abstehen. Dies Erleichtert die Verwendung eines Kanalroboters bei der Reparatur von Schadstellen in Rohrleitungen.

Das angesprochene "Schneiden" kann hier eine doppelte Bedeutung haben. Im ersten Sinne ist hier die Überschneidung gemeint, was bedeutet, dass sich Teile des Kolbenträgers nach dem Auspressen in einem Bereich befinden, wo vorher Abdichtmittel war. Hierbei ist insbesondere die Überschneidung radial zur Auspressrichtung und somit durch die (gedachte) Mantelfläche eines Zylinders gemeint. Im zweiten Sinne kann in bestimmten Ausführungsformen mit dem Schneiden ein tatsächliches physikalisches Aufschneiden der Hülle des Behälters gemeint sein. Üblicherweise sind Statikmischer als Rohre ausgelegt und daher sehr lang.

Durch das Mischen des Abdichtmittels direkt an der Reparaturstelle ergeben sich mehrere Vorteile. So können mit diesem Mehrkammermagazin auch schnellreagierende Harze wie beispielsweise Zweikomponenten-Epoxidharze verwendet werden, auch wenn die Anfahrt zur Reparaturstelle länger dauert. Des Weiteren kann mit dem erfindungsgemäßen Magazin an jeder Reparaturstelle gezielt nur so viel Abdichtmittel vermischt werden, wie auch tatsächlich gebraucht wird. Die Menge an Abfall wird dadurch reduziert. Bisher wurden bekannte Magazine mit bereits fertig gemischtem Abdichtmittel gefüllt. Da man nicht wusste, wie viel Abdichtmittel für die Reparatur benötigt wird, wurde zur Sicherheit in der Regel das ganze Magazin gefüllt. War die Reparatur abgeschlossen und verblieb noch ein Rest Abdichtmittel im Magazin, wurde dieser Rest entsorgt, da er bereits reagiert hatte und nicht mehr verarbeitet werden konnte. Im erfindungsgemäßen Magazin entsteht Abmischmittelabfall nur durch die ungewollte Aushärtung in der Mischvorrichtung. Diese Aushärtung reagiert aber wegen der geringen Menge an Volumen ohnehin etwas langsamer als in bekannten Vorrichtungen und sie wird durch eine kontinuierliche Abarbeitung von Reparaturstellen umgangen.

In einer ersten Ausführungsform ist eine Verwendung von Kartuschen als Behälter für die Abdichtmittelkomponenten angedacht. Bei den Komponenten kann es sich beispielsweise um ein Harz und einen Härter handeln, welche in unterschiedlichen Kartuschen gelagert sind, die in die Kammern des Magazins eingelegt werden. Die Kammern des erfindungsgemäßen Magazins sind hierbei zur Aufnahme von austauschbaren Kartuschen ausgebildet, wobei die Kartuschen insbesondere eine zylinderförmige Hülle mit offenem Boden und einen innerhalb der Hülle verschiebbaren Kartuschenkolben umfassen. Die Kolben des Mehrkammermagazins sind dafür ausgebildet, durch Kontaktierung der Kartuschenkolben Abdichtmittelkomponentenmasse aus den Kartuschen zu drücken.

In einer möglichen Ausführungsform umfassen die Kartuschen nur ein insbesondere zylinderförmiges Rohr (bzw. eine zylinderförmige Hülle) und einen Kartuschenkolben, was die Befüllung für kleinere Serien vereinfacht.

In einer alternativen Ausführungsform werden keine Kartuschen mit fester Hülle, sondern flexible Schlauchbeutel als Behälter für die Abdichtmittelkomponenten verwendet, welche sich durch die Kolben des Magazins zusammendrücken lassen, wodurch die Abdichtmittelkomponentenmasse aus den Schlauchbeuteln herausgedrückt wird.

Diese Schlauchbeutel werden in die Kammern des Magazins eingelegt und zusammengepresst. Die Verwendung von Schlauchbeuteln bei Abdichtmitteln ist an sich bekannt, beispielsweise bei Statikmischern. Diese verwendet jedoch die übliche Konstruktion eines Kolbens, dessen Arm bzw. Halterung in Längsrichtung nach hinten absteht und dadurch viel Platz beansprucht, wenn die Behälter noch gefüllt sind. Bei dem erfindungsgemäßen Magazin weisen die Einlegefächer bzw. Kammern dagegen seitliche Ausnehmungen auf, durch die jeweils ein Arm des Kolbenträgers fährt und in der Kammer den Kolben führt. Durch die Verwendung flexibler Schlauchbeutel wird die vorgeschlagene Mischlösung kompakter und flexibler, sodass das erfindungsgemäße Mehrkammermagazin einfacher mit einem Kanalroboter transportiert werden kann.

In einer weiteren möglichen Ausführungsform ist vorgesehen, dass der Kolbenträger Klingen umfasst, welche durch die seitlichen Ausnehmungen in die Kammern ragen und dazu ausgebildet sind, die in den Kammern aufgenommenen Behälter seitlich aufzuschneiden. Die Klingen sind also insbesondere im Bereich der durch die seitlichen Ausnehmungen der Kammern ragenden Arme des Kolbenträgers angeordnet. Bei einer Verwendung von Kartuschen als Behälter werden diese Kartuschen durch das Aufschneiden der Mantelfläche zerstört und beispielsweise nach dem einmaligen Gebrauch entsorgt. Für den Anwender bedeutet dies einen enormen Zeitgewinn und er kommt nicht mit dem Abdichtmittel in Berührung. Bei einer Verwendung von Schlauchbeuteln als Behälter können die in die Kammern eingelegten Schläuche durch die Klingen seitlich aufgeschnitten werden.

In einer weiteren Ausführungsform werden die Kartuschen oder Schlauchbeutel durch Klingen geschnitten, welche lösbar am Kolbenträger montiert sind und dadurch einfach ausgetauscht werden können. Dabei muss der Kolbenträger nicht angeschliffen werden. Die Klingen stellen Austauschteile dar, die sich einfach wechseln lassen.

In einer weiteren Ausführungsform werden die Kammern einzeln oder das gesamte Magazin geheizt. Hierfür ist eine Heizvorrichtung vorgesehen, welche beispielsweise einzelne Heizelemente an oder in den Kammern und/oder eine Hülle für das gesamte Magazin umfassen kann, innerhalb welcher dann geheizt wird.

In einer weiteren Ausführungsform werden die ausgepressten Abdichtmittelkomponenten vor Eintritt in die Mischvorrichtung aufgeheizt, da dadurch die Viskosität der Masse verringert wird, was wiederum das Fließverhalten in der Mischvorrichtung verbessert. Hierfür ist mindestens ein Heizelement an einem Eingang der Mischvorrichtung angeordnet.

Alternativ oder zusätzlich können die Abdichtmittelkomponenten während des Mischvorgangs aufgeheizt werden, was eine nachträglich schnellere Aushärtung begünstigt. Hierfür können ein oder mehrere Heizelemente an oder in der Mischvorrichtung vorgesehen sein.

Alternativ oder zusätzlich kann das fertig gemischte Abdichtmittel nach Austritt aus der Mischvorrichtung und somit direkt vor der Verarbeitung aufgeheizt werden. Hierzu ist mindestens ein Heizelement an einem Ausgang der Mischvorrichtung angeordnet, beispielsweise an oder in einer Düse, aus welcher das gemischte Abdichtmittel austritt. Dadurch kann ein langsam reagierendes Abdichtmittel "angekickt" werden.

Die hier genannten Heizelemente können elektrisch betrieben sein, wobei sich eine Energiequelle (insbesondere Batterie) am Magazin befindet kann. Alternativ kann die Energieversorgung durch einen Kanalroboter erfolgen.

In einer weiteren Ausführungsform ist vorgesehen, dass die Auspressvorrichtung mindestens einen Aktuator umfasst, mittels welchem die Kolben zum Bewirken der Auspressbewegung verschiebbar sind.

In einer Ausführungsform umfasst der mindestens eine Aktuator einen Druckluftzylinder, mittels welchem der Kolbenträger zur Bewirkung der Auspressbewegung der Kolben entlang der Längsachse des Mehrkammermagazins bewegbar ist. Hier wird also die notwendige Auspresskraft und Bewegung der Kolben durch einen Druckluftzylinder erzeugt. Dieser kann entweder zentral zwischen den Kammern angeordnet sein oder es kann pro Kammer ein Druckluftzylinder verbaut sein.

In einer alternativen Ausführungsform umfasst die Auspressvorrichtung eine durch den genannten Aktuator rotatorisch antreibbare Spindel, an welcher der Kolbenträger zur Bewirkung der Auspressbewegung der Kolben verschiebbar gelagert ist. Hier wird der Kolbenträger mit seinen Kolben also über eine Spindel angetrieben, welche wiederum durch den Aktuator angetrieben wird. Bei dem Aktuator kann es sich um einen Druckluftmotor oder einen Elektromotor handeln bzw. der Aktuator kann einen Druckluftmotor oder einen Elektromotor umfassen. Der Druckluftmotor oder Elektromotor ist bevorzugt in oder an einem der Mischvorrichtung beabstandeten Endstück des Mehrkammermagazins angeordnet. Die Spindel verläuft parallel und vorzugsweise mittig bzw. kollinear zur mittleren Längsachse des Magazins.

In einer weiteren Ausführungsform ist vorgesehen, dass die Kammern über Zwischenstücke mit der Mischvorrichtung verbunden sind, wobei die aus den Behältern ausgepressten Massen durch die jeweiligen Zwischenstücke in die Mischvorrichtung pressbar sind. Weiterhin ist mindestens eines der Zwischenstücke, vorzugsweise alle Zwischenstücke, individuell verschließbar. Dadurch kann eine Kammer, in der kein Behälter eingesetzt ist, für Abdichtmasse aus den anderen Behältern verschlossen werden. Dadurch ergibt sich die Möglichkeit, bewusst eine oder mehrere Kammern nicht mit Behältern zu befüllen. Die Kanäle zur Mischvorrichtung der leeren Kammern sind dann verschlossen, wodurch ein ungewollter Seitenablauf für die übrigen Abdichtmittelkomponenten verschlossen wird. Dadurch lassen sich mit dem erfindungsgemäßen Magazin unterschiedliche Mischverhältnisse realisieren.

In einer weiteren Ausführungsform ist eine Füllstandsanzeige zum Anzeigen einer momentanen Position der Kolben und somit des momentanen Füllstands des Mehrkammermagazins vorgesehen. Bei der Füllstandsanzeige kann es sich im einfachsten Fall um eine Markierung am Kolbenträger handeln. Allerdings ist auch eine andere optische Anzeige wie beispielsweise eine digitale Anzeige in Kombination mit einem Positionssensor denkbar.

In einer weiteren Ausführungsform ist mindestens eine Werkzeugaufnahme am Mehrkammermagazin vorgesehen, an der Werkzeuge zur direkten Weiterverarbeitung des gemischten Abdichtmittels montiert bzw. montierbar sind. Mitgeführte Werkzeuge, welche am Magazin befestigt sind, ermöglichen die unmittelbare Verarbeitung des Abdichtmittels nach dem Mischen. Als Werkzeug kann auch eine Düse verwendet werden, mit der Abdichtmittel hinter eine Schalung geleitet wird. Somit ist es mit diesem Magazin möglich, das Abdichtmittel zu transportieren, direkt an der Reparaturstelle zu mischen und direkt nach dem Mischen zu verarbeiten.

Alternativ oder zusätzlich kann das Mehrkammermagazin über einen mechanischen Anschluss verfügen, mit dem das Magazin an einem Kanalroboter angeschlossen und mit der notwendigen Druckluft oder Strom versorgt werden kann.

In einer weiteren Ausführungsform ist das Mehrkammermagazin als manuelles Arbeitsgerät ausgebildet, welches unabhängig von der Kanalisationssanierung eingesetzt wird. Dazu ist es mobil und verfügt über einen Griff für manuelle Arbeiten.

Das Mehrkammermagazin kann zur Energieversorgung durch eine externe Quelle vorzugsweise eine Energieversorgungsleitung und/oder einen Luftdruckschlauch oder einen Anschluss für eine Energieversorgungsleitung und/oder einen Luftdruckschlauch aufweisen.

Mit der Verwendung des Mehrkammermagazins ändert sich auch das Verfahren der Kanalisationssanierung. Ein erfindungsgemäßes Verfahren zum Reparieren von Rohrleitungsmuffen oder Rohrrissen unter Verwendung eines Abdichtmittels, insbesondere eines Epoxidharzes, mittels des erfindungsgemäßen Mehrkammermagazins umfasst dabei folgende Schritte:
- Einsetzen von Komponenten eines Abdichtmittels enthaltenden Behältern in die Kammern des Mehrkammermagazins;
- Anschließen des befüllten Mehrkammermagazins an einen Kanalroboter;
- Anfahren einer zu reparierenden Schadstelle mit dem Kanalroboter und ggf. Vorbereiten für die Reparatur;
- optional: Ausfräsen einer Vertiefung und/oder Entfernen von Ablagerungen an der Schadstelle;
- Auspressen und Mischen des Abdichtmittels mittels des Mehrkammermagazins;
- vorzugsweise: Füllen und Verspachteln der zuvor ausgefrästen Vertiefung mit Hilfe von mindestens einem Werkzeug, welches an einer Werkzeugaufnahme des Mehrkammermagazins befestigt ist;
- Verlassen der Schadstelle sowie gegebenenfalls Entfernen der leeren Behälter, insbesondere, nachdem das ausgebrachte Abdichtmittel ausgehärtet ist. Anschließend kann ggf. das Magazin neu befüllt bzw. geladen werden.

In einer möglichen Ausführungsform umfasst das erfindungsgemäße Verfahren ferner folgende Schritte, sodass das Magazin in der Kanalisationssanierung, insbesondere der Hausanschlusssanierung, unter Zuhilfenahme einer Schalung eingesetzt werden kann:
- Platzieren einer Schalung an der zu reparierenden Schadstelle mittels des Kanalroboters;
- Hinterfüllen der Schalung mit dem gemischten Abdichtmittel mittels einer Düse, die vorzugsweise am Ende der Mischvorrichtung und/oder an einer Werkzeugaufnahme des Magazins befestigt ist;
- Entfernen der Schalung.

Weitere Merkmale, Einzelheiten und Vorteile der Erfindung ergeben sich aus dem nachfolgend anhand der Figuren erläuterten Ausführungsbeispiel. Es zeigen:
- Figur 1:: ein bevorzugtes Ausführungsbeispiel des erfindungsgemäßen Mehrkammermagazins mit eingesetzten Behältern in einer perspektivischen Ansicht;
- Figur 2:: den Endbereich des leeren Mehrkammermagazins in einer perspektivischen Ansicht; und
- Figur 3:: das Mehrkammermagazin im Einsatz beim Verspachteln einer Schadstelle innerhalb einer Rohrleitung in einer perspektivischen Ansicht.

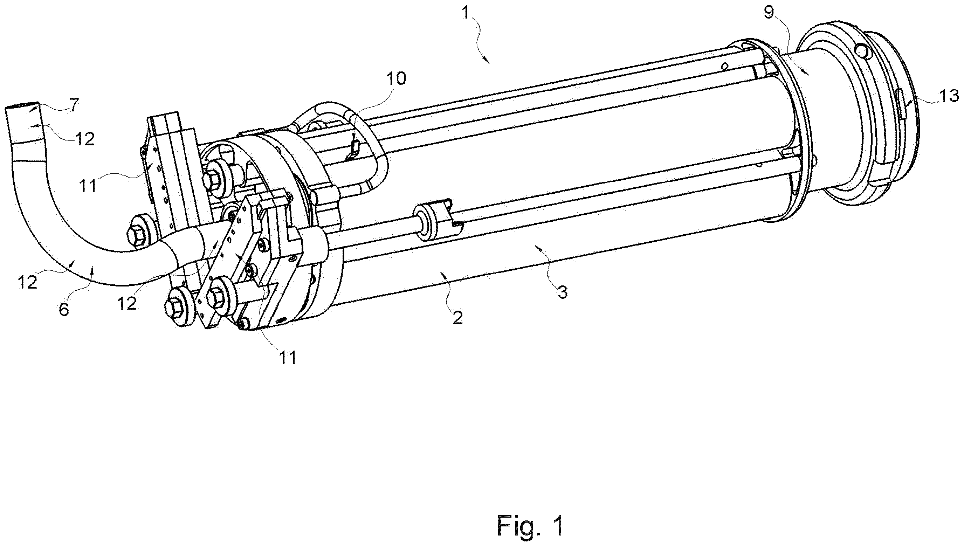

Die Figur 1 zeigt in einer perspektivischen Ansicht ein bevorzugtes Ausführungsbeispiel des erfindungsgemäßen kompakten Mehrkammermagazins 1. Bei dem hier gezeigten Ausführungsbeispiel werden in zylinderförmigen Kartuschen 3 gelagerte Komponenten eines Abdichtmittels in Kammern 2 des Magazins 1 eingelegt, um diese herauszupressen und zu einem fertigen Abdichtmittel zu mischen, welches zur Reparatur einer Schadstelle eingesetzt werden kann. Bei dem Abdichtmittel kann es sich um ein Mehrkomponenten-Harz, insbesondere Epoxidharz, handeln. Alternativ könnten die Harzkomponenten beispielsweise in flexiblen Schlauchbeuteln gelagert sein.

Das Magazin 1 weist in dem hier gezeigten Ausführungsbeispiel vier Kammern 2 auf, welche gleichmäßig um eine zentrale Mittelachse (welche auch die Längsachse des Magazins 1 bildet) angeordnet sind und parallel zueinander verlaufen. Alternativ könnten auch weniger als vier, beispielsweise zwei oder drei Kammern 2, aber auch mehr als vier Kammern 4 vorgesehen sein. Das Magazin 1 weist eine Mischvorrichtung 6 auf, welche mit allen Kammern 2 derart verbunden ist, dass das aus den Behältern 3 herausgepresste Material in die Mischvorrichtung 6 gedrückt wird und sich darin mischt. Hierzu ist die Mischvorrichtung 6 als flexibler Schlauch mit innenliegenden Statikmischerelementen ausgebildet.

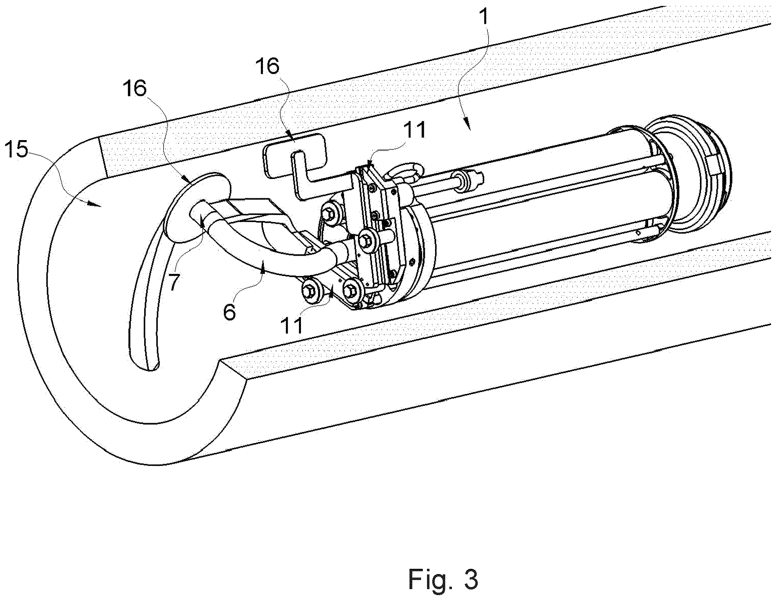

Die Behälter 3 sind in diesem Ausführungsbeispiel zylinderförmig und umfassen eine rohrförmige feste Hülle und einen darin verschiebbar gelagerten Kartuschenkolben. Durch Verschieben des Kartuschenkolbens in Richtung eines Auslasses des Behälters 3 wird Harzkomponentenmasse aus dem Auslass herausgedrückt und in die Mischvorrichtung 6 gepresst. Darin mischen sich die Massen der einzelnen Komponenten zum endgültigen Harz, welches aus einem Ausgang des Schlauchs 6 tritt und dann verarbeitet werden kann. Hierzu sind im Bereich des Schlauchs 6 Werkzeugaufnahmen 11 angebracht, an denen Werkzeuge 16 zur direkten Weiterverarbeitung der austretenden, fertig gemischten Abdichtmasse montierbar sind (Beispiele für solche Werkzeuge 16 sind in der Figur 3 gezeigt, hier am Beispiel des Verspachtelns einer Schadstelle innerhalb einer Rohrleitung 15). Der Ausgang des Schlauchs 6 wird in diesem Ausführungsbeispiel durch eine Düse 7 gebildet.

In dem hier gezeigten Ausführungsbeispiel sind Heizelemente 12 sowohl an einem Eingang des Schlauchs 6 als auch im Bereich der Düse 7, d.h. am Ausgang des Schlauchs 6 sowie in einem mittleren Bereich des Schlauchs 6 vorgesehen, um einerseits die Komponentenmassen vor dem Mischvorgang aufwärmen zu können und andererseits den Schlauch 6 selbst sowie die austretende, gemischte Abdichtmasse heizen zu können.

An einem der Mischvorrichtung 6 gegenüberliegenden Ende weist das Magazin 1 ein Endstück auf, welches sich stirnseitig an die Kammern 2 anschließt und dem mechanischen Anschluss des Magazins 1 an einen Kanalroboter dient. Darüber hinaus ist in dem Endstück 13 ein Aktuator 9 in Form eines Elektromotors oder eines Druckluftmotors untergebracht, auf dessen Funktion nachfolgend eingegangen wird.

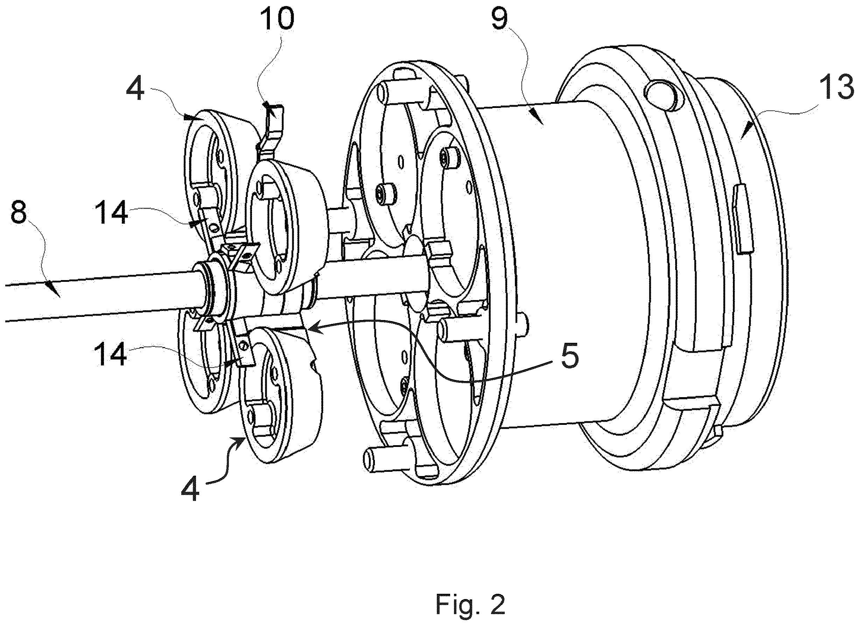

Die Figur 2 zeigt das leere Magazin 1 im Bereich des Endstücks 13. Es ist zu erkennen, dass eine Spindel 8 entlang der Mittellinie bzw. Längsachse des Magazins, d.h. mittig zwischen den Kammern 2 und parallel zu deren Längsachsen und zur Auspressrichtung zwischen der Mischvorrichtung 6 und dem Endstück 13 verläuft. Die Spindel 8 ist durch den Aktuator 9 rotatorisch antreibbar. Auf der Spindel 8 sitzt ein Kolbenträger 5 derart, dass durch Drehung der Spindel 8 der Kolbenträger 5 linear entlang der Spindel 8 in Richtung Mischvorrichtung 6 oder in Richtung Endstück 13 bewegt werden kann, je nach Drehrichtung der Spindel 8. Der Kolbenträger 5 weist radial von der mittigen Lagerung an der Spindel 8 abstehende Arme auf, an denen Kolben 4 angeordnet sind. Die Anzahl der Arme bzw. Kolben 4 entspricht der Anzahl der Kammern 2. Diese Kolben 4 sind so ausgebildet, dass sie mit den Kartuschenkolben der Behälter 3 zusammenwirken, genauer gesagt drücken sie bei einer Verschiebung des Kolbenträgers 5 in Richtung Mischvorrichtung 6 von hinten auf die Kolben der einen offenen Boden aufweisenden Kartuschen 3, sodass vorne am Auslass der Kartuschen 3 die Komponentenmassen austreten.

Die Kolben 4 werden also in diesem Ausführungsbeispiel nicht einzeln bewegt (beispielsweise durch den jeweiligen Kammern 2 zugeordnete Druckluftzylinder), sondern gemeinsam über den verbindenden Kolbenträger 5, welcher durch Antreiben der Spindel 8 linear verschoben wird. Die Figur 2 zeigt auch, dass das Endstück 13 auf der den Kammern 2 zugewandten Seite Einbuchtungen aufweist, welche als Halterungen für die hinteren Enden der Kartuschen 3 dienen.

Die Kammern 2 sind seitlich offen, bis auf Haltestangen (vgl. Fig. 1), welche zwischen den beiden Endstücken des Magazins 1 verlaufen und diese miteinander verbinden. Zur mittigen Spindel 8 hin sind die Kammern 2 also ebenfalls offen. In diesem Ausführungsbeispiel werden die "Kammern" 2 somit im Wesentlichen durch die Raumbereiche gebildet, die von den Kartuschen 3 im eingesetzten Zustand eingenommen werden. Alternativ könnten durch entsprechende Wandungen tatsächliche Kammern 2 gebildet sein, beispielsweise um flexible Schlauchbeutel stabil aufzunehmen.

Die offenen Bereiche der Kammern 2, die zu der Spindel 8 weisen, stellen Ausnehmungen dar, durch die die Kolben 4 tragenden Arme des Kolbenträgers 5 radial, d.h. von der Seite her in die Kammern, d.h. in die Bereiche, in denen sich die eingesetzten Kartuschen 3 befinden, ragen. Bei dem erfindungsgemäßen Magazin 1 werden die Kolben 4 also nicht über parallel zur Längsachse verlaufende Stangen oder Arme gehalten, sondern über radial von der Spindel 8 ausgehende Seitenarme des Kolbenträgers 5. Dadurch ergibt sich eine wesentlich kompaktere Bauform des erfindungsgemäßen Magazins 1, welche sich für den Einsatz in beengten Arbeitsverhältnissen wie beispielsweise in einer Rohrumgebung besonders gut eignet.

Die Arme des Kolbenträgers 5 sind in diesem Ausführungsbeispiel weiterhin mit Klingen 14 versehen, deren Schneiden in Richtung Mischvorrichtung 6 bzw. Kartuschenkolben weisen (vgl. Fig. 2). Dadurch werden die Hüllen der eingesetzten Kartuschen 3 seitlich aufgeschnitten bzw. aufgeschlitzt. Dies ermöglicht, dass die Kolben 4 über die radialen Arme mit dem mittigen Kolbenträger 5 verbunden sind. Ansonsten würden die Arme mit den Hüllen der Kartuschen 3 kollidieren.

Alternativ zu den Kartuschen können, wie bereits angedeutet, flexible Schlauchbeutel als Behälter 3 für die Harzkomponenten eingesetzt werden. In diesem Fall weisen die Kammern 2 vorzugsweise eine Wandung auf, wobei die Kammern 2 auf der zur Spindel 8 weisenden Seite insbesondere eine parallel zur Längsachse verlaufende, schlitzförmige Ausnehmung aufweisen, durch die die Arme des Kolbenträgers 5 ragen. Beim Verschieben des Kolbenträgers 5 zum Auspressen der Komponentenmassen bewegen sich Arme entlang der Schlitze, sodass die Kolben 4 innerhalb der Kammern 2 die Schläuche 3 zusammenpressen, um die Komponentenmassen herauszuquetschen. In einer solchen Ausführung müssen nicht zwingend Klingen 14 vorgesehen werden, da die Schläuche 3 zusammengedrückt werden.

Wie in der Figur 2 gut zu erkennen ist, besitzt der Kolbenträger 5 einen radial abstehenden Arm 10, welcher durch die eingesetzten Kartuschen 3 hindurchragt (vgl. Fig. 1) und in diesem Ausführungsbeispiel als Füllstandsanzeige dient, der die momentane Position der Kolben 4 und somit den Füllstand der Behälter 3 anzeigt. Andere Formen von Füllstandsanzeigen sind selbstverständlich ebenfalls möglich.

Die Figur 3 zeigt einen möglichen Einsatz des erfindungsgemäßen Mehrkammermagazins 1 beim Verspachteln einer Schadstelle in einem Kanalisationsrohr 15. Eine alternative Anwendung wäre der Einsatz einer Schalung zur Reparatur einer Rohranschlussstelle, wobei die Schalung im Bereich des zu reparierenden Anschlusses mit einem mittels des Magazins 1 gemischten Epoxidharzes hinterfüllt wird.

### Bezugszeichenliste:

- 1: Kompaktes Mehrkammermagazin
- 2: Kammer
- 3: Behälter (Kartusche)
- 4: Kolben
- 5: Kolbenträger
- 6: Mischvorrichtung (Schlauch)
- 7: Düse
- 8: Spindel
- 9: Aktuator (Druckluftmotor oder Elektromotor)
- 10: Füllstandsanzeige
- 11: Werkzeugaufnahme
- 12: Heizelement
- 13: Endstück zum Anschluss an einen Kanalisationsroboter
- 14: Klinge
- 15: Kanalisationsrohr
- 16: Werkzeug

## Patentansprüche

1. Kompaktes Mehrkammermagazin (1) mit integrierter Auspressvorrichtung und integrierter Mischvorrichtung (6), insbesondere zum Mischen von Epoxidharz in der Kanalisationssanierung, umfassend mindestens zwei voneinander getrennte Kammern (2) zur Aufnahme von Komponenten eines Abdichtmittels enthaltenden Behältern (3), mindestens zwei innerhalb der Kammern (2) mittels einer Auspressvorrichtung des Mehrkammermagazins (1) entlang einer Längsachse des Mehrkammermagazins (1) bewegbare Kolben (4) zum Auspressen von Abdichtmittelkomponentenmasse aus den Behältern (3) sowie eine Mischvorrichtung (6), durch welche die aus den Behältern (3) ausgepressten Massen zum Mischen der Abdichtmittelkomponenten gepresst werden,
**dadurch gekennzeichnet, dass**
die Mischvorrichtung (6) einen flexiblen Schlauch mit innenliegenden Statikmischerelementen umfasst, die Kolben (4) über einen mittels der Auspressvorrichtung bewegbaren Kolbenträger (5) miteinander verbunden sind und die Kammern (2) jeweils seitlich eine Ausnehmung aufweisen, durch die ein Abschnitt des Kolbenträgers (5) radial zur Längsrichtung des Mehrkammermagazins (1) in das Innenvolumen der Kammer (2) ragt.

2. Mehrkammermagazin (1) nach Anspruch 1, **dadurch gekennzeichnet, dass** die Kammern (2) zur Aufnahme von austauschbaren Kartuschen (3) ausgebildet sind, wobei die Kartuschen (3) insbesondere eine zylinderförmige Hülle mit offenem Boden und einen innerhalb der Hülle verschiebbaren Kartuschenkolben umfassen, wobei die Kolben (4) des Mehrkammermagazins (1) ausgebildet sind, durch Kontaktierung der Kartuschenkolben Abdichtmittelkomponentenmasse aus den Kartuschen (3) zu drücken.

3. Mehrkammermagazin (1) nach Anspruch 1, **dadurch gekennzeichnet, dass** die Kammern (2) zur Aufnahme von Schlauchbeuteln (3) ausgebildet sind, wobei die Kolben (4) des Mehrkammermagazins (1) ausgebildet sind, durch Zusammenpressen der flexiblen Schlauchbeutel (3) Abdichtmittelkomponentenmasse aus diesen herauszudrücken.

4. Mehrkammermagazin (1) nach einem der vorhergehenden Ansprüche, **dadurch gekennzeichnet, dass** der Kolbenträger (5) Klingen (14) umfasst, welche durch die seitlichen Ausnehmungen in die Kammern (2) ragen und dazu ausgebildet sind, die in den Kammern (2) aufgenommenen Behälter (3) seitlich aufzuschneiden, wobei die Klingen (14) vorzugsweise als Austauschteile ausgebildet und lösbar am Kolbenträger (5) montiert sind.

5. Mehrkammermagazin (1) nach einem der vorhergehenden Ansprüche, ferner umfassend eine Heizvorrichtung, mittels welcher die Kammern (2) oder das gesamte Mehrkammermagazin (1) beheizbar sind.

6. Mehrkammermagazin (1) nach einem der vorhergehenden Ansprüche, ferner umfassend mindestens ein Heizelement (12), welches zum Aufwärmen der ausgepressten Abdichtmittelkomponenten vor dem Mischvorgang an einem Eingang der Mischvorrichtung (6) und/oder zum Aufwärmen der Mischvorrichtung (6) an einem Abschnitt der Mischvorrichtung (6) und/oder zum Aufwärmen des gemischten Abdichtmittels an einem Ausgang der Mischvorrichtung (6) angeordnet ist.

7. Mehrkammermagazin (1) nach einem der vorangegangenen Ansprüche, **dadurch gekennzeichnet, dass** die Auspressvorrichtung mindestens einen Aktuator umfasst, mittels welchem die Kolben (4) zum Bewirken der Auspressbewegung verschiebbar sind.

8. Mehrkammermagazin (1) nach Anspruch 7, **dadurch gekennzeichnet, dass** der mindestens eine Aktuator einen Druckluftzylinder umfasst, mittels welchem der Kolbenträger (5) zur Bewirkung der Auspressbewegung der Kolben (4) entlang der Längsachse des Mehrkammermagazins (1) bewegbar ist.

9. Mehrkammermagazin (1) nach Anspruch 7, **dadurch gekennzeichnet, dass** die Auspressvorrichtung eine durch den Aktuator rotatorisch antreibbare Spindel (8) umfasst, an welcher der Kolbenträger (5) zur Bewirkung der Auspressbewegung der Kolben (4) verschiebbar gelagert ist, wobei der Aktuator einen Druckluftmotor (9) oder einen Elektromotor (9) umfasst, welcher bevorzugt in oder an einem der Mischvorrichtung (6) beabstandeten Endstück (13) des Mehrkammermagazins (1) angeordnet ist.

10. Mehrkammermagazin (1) nach einem der vorhergehenden Ansprüche, **dadurch gekennzeichnet, dass** die Kammern (2) über Zwischenstücke mit der Mischvorrichtung (6) verbunden sind, wobei die aus den Behältern (3) ausgepressten Massen durch die jeweiligen Zwischenstücke in die Mischvorrichtung (6) pressbar sind, wobei mindestens ein Zwischenstück, vorzugsweise alle Zwischenstücke, individuell verschließbar sind, um bei Abwesenheit eines Behälters in einer Kammer (2) ein Eindringen von aus einer anderen Kammer (2) gepresster Masse in die leere Kammer (2) zu blockieren.

11. Mehrkammermagazin (1) nach einem der vorhergehenden Ansprüche, ferner umfassend eine Füllstandsanzeige (10) zum Anzeigen einer momentanen Position der Kolben (4) und somit des momentanen Füllstands des Mehrkammermagazins (1).

12. Mehrkammermagazin (1) nach einem der vorhergehenden Ansprüche, ferner umfassend mindestens eine Werkzeugaufnahme (11), an der ein Werkzeug (16) zum Verarbeiten des gemischten Abdichtmittels direkt nach dem Mischen, und/oder einen mechanischen Anschluss (13) zur Montage des Mehrkammermagazins (1) an einem Kanalroboter.

13. Mehrkammermagazin (1) nach einem der vorhergehenden Ansprüche, **dadurch gekennzeichnet, dass** das Mehrkammermagazin (1) als mobile Vorrichtung ausgebildet ist und einen Griff umfasst, wobei das Mehrkammermagazin (1) zur Energieversorgung durch eine externe Quelle vorzugsweise eine Energieversorgungsleitung und/oder einen Luftdruckschlauch oder einen Anschluss für eine Energieversorgungsleitung und/oder einen Luftdruckschlauch aufweist.

14. Verfahren zum Reparieren von Rohrleitungsmuffen oder Rohrrissen unter Verwendung eines Abdichtmittels, insbesondere eines Epoxidharzes, welches mittels eines Mehrkammermagazins (1) nach einem der vorhergehenden Ansprüche gemischt wird, mit folgenden Schritten:
- Einsetzen von Komponenten eines Abdichtmittels enthaltenden Behältern (3) in die Kammern (2) des Mehrkammermagazins (1);
- Anschließen des befüllten Mehrkammermagazins (1) an einen Kanalroboter;
- Anfahren einer zu reparierenden Schadstelle mit dem Kanalroboter;
- optional Ausfräsen einer Vertiefung und/oder Entfernen von Ablagerungen an der Schadstelle;
- Auspressen und Mischen des Abdichtmittels mittels des Mehrkammermagazins (1);
- vorzugsweise Füllen und Verspachteln der zuvor ausgefrästen Vertiefung mit Hilfe von mindestens einem Werkzeug (16), welches an einer Werkzeugaufnahme (11) des Mehrkammermagazins (1) befestigt ist;
- Verlassen der Schadstelle sowie gegebenenfalls Entfernen der leeren Behälter (3).

15. Verfahren nach dem vorhergehenden Anspruch, ferner umfassend die folgenden Schritte:
- Platzieren einer Schalung an der zu reparierenden Schadstelle mittels des Kanalroboters;
- Hinterfüllen der Schalung mit dem gemischten Abdichtmittel mittels einer Düse (7), die vorzugsweise am Ende der Mischvorrichtung (6) befestigt ist;
- Entfernen der Schalung.
